# EUROPEAN PATENT APPLICATION

(11) **EP 2 492 220 A1**
(43) Date of publication of application: **29.08.2012**
(21) Application number: 11425042.6
(22) Date of filing: 22.02.2011
(51) Int. Cl.: B65G 47/76

(54) **Device for diverting objects, in particular luggage, carried by a conveyor belt**

(71) Applicant: ELSAG DATAMAT S.p.A., Genova (IT)
(72) Inventor: Parodi, Carlo, 16154 Genova (IT)
(74) Representative: Jorio, Paolo

(57) **Abstract**

A device for diverting objects from a conveyor belt comprising a moving element (7), which is mobile under the thrust of an actuator between: a resting position, in which the moving element (7) does not interfere with the objects (10) carried by the conveyor belt (5); and an activation position, in which the moving element (7) extends towards the conveyor belt (5) in such a way that the objects (10) come to bear upon the moving element and are diverted in a direction transverse to that of advance of the conveyor belt (5). The moving element comprises at least one pusher member (22) having a first end portion hinged to a supporting casing and mobile with respect thereto about an axis of rotation (23) which is set vertical in use. According to the invention the actuator comprises a crank-and-connecting rod system in which at least one connecting rod (25) has a first end portion (25a) hinged to the pusher member (22) in an area of the pusher member comprised between a second end portion thereof and the axis of rotation; the connecting rod has a second end portion (25b) hinged to an end portion of a crank (27) that is angularly mobile about a motor axis of rotation (28) parallel to the axis of rotation (23).

## Description

The present invention relates to a device for diverting objects, in particular luggage, carried by a conveyor belt.

In many applications, it is necessary to shift the objects carried by a conveyor belt in a direction transverse to that of advance of the conveyor belt in order to unload the objects from the conveyor belt and direct them to other devices such as discharge devices, chutes, or other conveyor belts. Applications of said type are typical in luggage-sorting systems in airports.

The patent No. US 4,643,291 filed in the name of Rexnord Inc. describes a device for deflecting objects, in particular luggage, carried by a conveyor belt, wherein a plurality of pusher devices are arranged along a rectilinear portion of the conveyor belt and are designed to deflect the objects to respective chutes. Each pusher device is provided with a deflecting paddle, which is linearly mobile under the thrust of an actuator between a resting position in which the paddle is parallel and set alongside an edge of the conveyor belt, and an activation position in which the paddle forms an angle of approximately 45° with the direction of advance of the belt and intercepts the postal objects in order to direct them to a respective chute.

The German patent application No. 28 42 914 filed in the name of Knapp Guenter describes a device for diverting objects, in particular luggage, carried by a conveyor belt, in which an L-shaped deflecting blade is angularly mobile between a resting position in which the blade is parallel to and set alongside an edge of the conveyor belt, and an activation position in which an end portion of the blade pushes an object towards an adjacent conveyor belt.

The patent application No. PCT WO 2005/077792 filed in the name of Sandvik describes a device for diverting objects from a conveyor belt comprising a supporting casing designed to be set alongside a conveyor belt, and a moving element that is angularly mobile about an axis of rotation under the thrust of an actuator between: a resting position in which the moving element is contained at least partially within the casing and does not interfere with the objects carried by the conveyor belt; and an activation position in which the moving element projects at least in part from the casing towards the conveyor belt in such a way that the objects come to bear upon a portion of the moving element and are diverted thereby in a direction transverse to that of advance of the conveyor belt.

The device described by the PCT patent application referred to above has an actuator provided with a mobile member, which is coupled to a first end portion of the moving element, the second end portion of which (or the area close thereto) being designed to come to bear upon the object moved by the conveyor belt in order to divert it. The axis of rotation is set in an area of the moving element close to the first end and remote with respect to the second end portion. On account of the arrangement referred to above the action of the actuator on the moving element is exerted through a disadvantageous lever; for this reason the actuator has to be oversized. Moreover, the impact of an object on the second end produces a high torque (the arm that extends between the axis of rotation and the second end is long) that discharges on the mobile member of the actuator. In many applications (the objects can weigh up to 50 kg in the case of luggage and can move at a rate in the region of 70-100 metres per minute) the values of impulsive torque generated can seriously damage the actuator jeopardizing operation of the device totally or partially.

The aim of the present invention is to provide a device for diverting objects that will overcome the drawbacks of the known art highlighted above.

The above aim is achieved by the present invention in so far as it relates to a device for diverting objects from a conveyor belt comprising supporting means designed to be set alongside a conveyor belt and a moving element that moves under the thrust of an actuator between: a resting position, in which the moving element does not interfere with the objects carried by the conveyor belt; and an activation position, in which the moving element extends towards the conveyor belt in such a way that the objects come to bear upon the moving element and are diverted in a direction transverse to that of advance of the conveyor belt; the moving element comprising at least one pusher member having a first end portion hinged to the supporting means and mobile with respect thereto about an axis of rotation which is set vertical in use, said device being characterized in that said actuator comprises a crank-and-connecting rod system in which at least one connecting rod has a first end portion hinged to the pusher member in an area of the pusher member comprised between a second end portion thereof and the axis of rotation; said connecting rod having a second end portion hinged to an end portion of a crank angularly mobile about a motor axis of rotation parallel to said axis.

The invention will now be described with reference to the attached drawings, which illustrate a preferred non-limiting embodiment thereof and in which:
Figure 1 is a perspective view of a device for diverting objects from a conveyor belt provided according to the teachings of the present invention and set in a first operative position;
Figure 2 is a perspective view of the device of Figure 1 set in a second operative position; and
Figure 3 is a perspective view of a detail of the device of Figure 1.

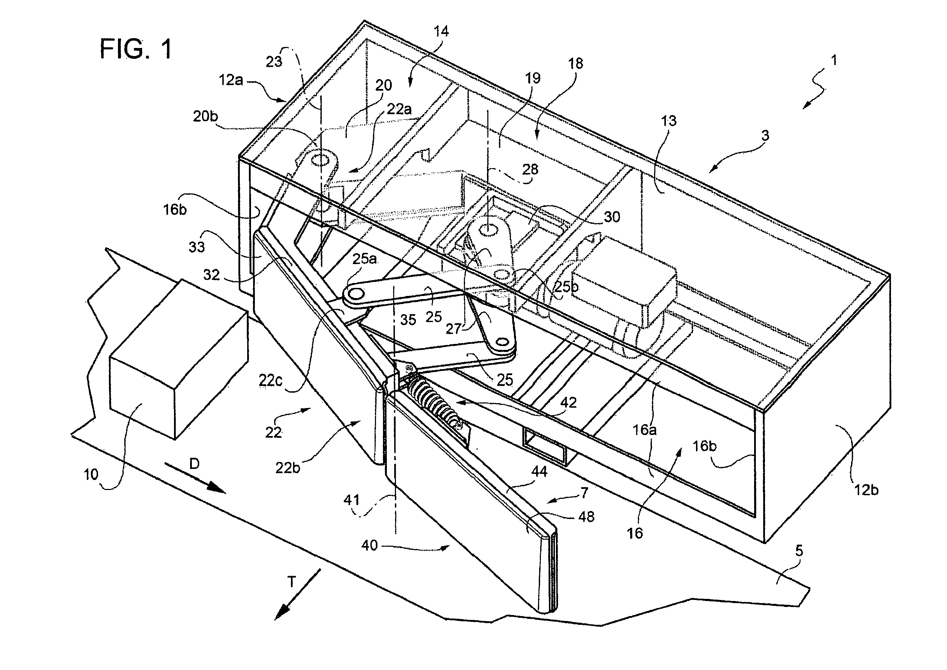

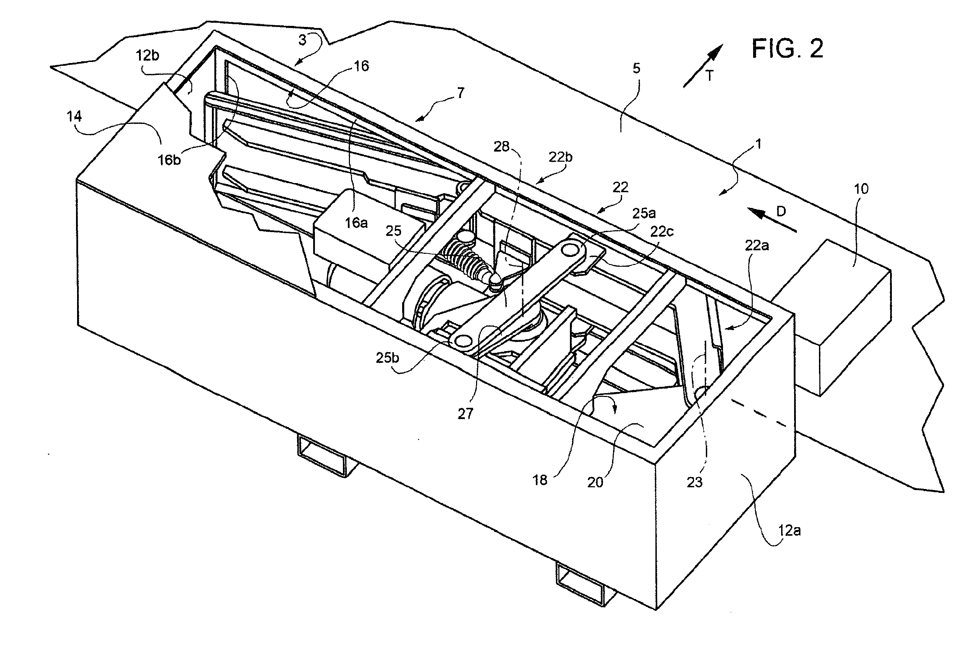

Designated as a whole by 1 in Figures 1 and 2 is a device for diverting objects from a conveyor belt.

The device 1 comprises a supporting casing 3 designed to be set alongside a conveyor belt 5 (illustrated schematically) and a moving element 7, which moves under the thrust of an actuator (illustrated hereinafter) between:
- a resting position (Figure 2), in which the moving element 7 is contained at least partially within the casing 3 and does not interfere with the objects 10 carried by the conveyor belt 5; and
- an activation position (illustrated in Figure 1), in which the moving element 7 projects at least in part from the casing 3 towards the conveyor belt 5 in such a way that the objects 10 come to bear upon a portion of the moving element and are diverted thereby in a direction transverse T to that of advance D of the conveyor belt 5.

In greater detail, the supporting casing 3, preferably made of metal material, has an elongated parallelepipedal shape and is limited by a pair of plane rectangular end side walls 12a, 12b, a plane rectangular side wall 13, and a top wall 14, which is also plane and rectangular and is set, in use, substantially horizontal.

The casing 3 defines a rectangular opening 16 designed to be set facing the conveyor belt 5 at a short distance from the conveyor belt 5 itself; the opening 16 is delimited by major rectilinear edges 16a, which are set horizontal, in use, and by minor rectilinear edges 16b, which are set vertical in use.

The casing 3 houses an element 18 for supporting the moving element 7, comprising a first rectilinear portion 19 set alongside the side wall 13 and a second rectilinear portion 20 transverse to the first portion and having an end portion 20b set alongside the end wall 12a.

The moving element 7 comprises a first pusher member 22 having a first end portion 22a hinged to the supporting element 18 and mobile with respect thereto about an axis of rotation 23 (set vertical in use) between the resting position (Figure 2) in which the first pusher member 22 is arranged so as to close part of the opening 16 and does not interfere with the objects 10 carried by the conveyor belt 5, and the activation position (Figure 1) in which the pusher member 22 extends from the opening 16 towards the conveyor belt 5 in such a way that the objects 10 that come to bear upon the pusher member 22 are diverted in the direction T transverse to the direction D of advance of the conveyor belt 5.

According to the present invention, the actuator comprises a crank-and-connecting rod system in which at least one rectilinear connecting rod 25 has a first end portion 25a hinged to the first pusher member 22 in an area of the pusher member comprised between a second end portion 22b thereof and the axis of rotation 23. The connecting rod 25 has a second end portion 25b hinged to an end portion of a crank 27, which is angularly mobile about an axis of rotation 28 parallel to the axis 23 under the thrust of an electric motor reducer 30 and is carried by the fixed frame 19.

In particular, the first end portion 25a is hinged to the first pusher member 22 in a central area 22c of the pusher member 22 substantially set at the same distance from the axis of rotation 23 and the second end portion 22b.

In greater detail, in order to obtain a particularly sturdy and reliable actuator, the crank-and-connecting rod system is of a "double" type and comprises a pair of rectilinear connecting rods 25, which each have a first end portion 25a hinged to the first pusher member 22 and a second end portion 25b hinged to an end portion of a crank 27, which is angularly mobile about an axis of rotation 28 parallel to the axis 23 under the thrust of an electric motor reducer carried by the supporting element 18. The cranks 27 are arranged on opposite sides of the motor-reducer assembly 30, which is mounted on the fixed frame 19. In particular, the connecting rod 25 connected to the motor reducer performs a complete rotation for each activation cycle.

The kinematic configuration of the complete mechanism, constituted by the connecting rod 25, by the crank 27, and by the pusher member 22 provides an articulated quadrilateral. On the basis of the known kinematic properties of the articulated quadrilateral, the pusher member 22 moves at a higher speed in the closing stroke (i.e., for bringing the pusher member 22 from the activation position to the resting position) than in the forward stroke (i.e., for moving the pusher member 22 from the resting position to the activation position), given the same speed of the crank 27.

In this way, the forces transmitted by the actuator through the connecting rod 25 is applied directly to the first pusher member 22, instead of being transmitted by a disadvantageous lever as occurs in the known art referred to above. Consequently, it is not necessary to oversize the actuator. The device according to the present invention guarantees high rates of diversion of the objects without damaging them excessively.

The use of a quadrilateral mechanism, on account of its high closing speed, enables, in fact, high levels of performance to be achieved with reduced total-cycle times, for example 0.8 s. In this way, the pusher device 22, on account of its fast closing, frees the passage for a subsequent object moving on the belt 5.

The speed of the pusher member 22 moreover slows down during the opening phase, and hence the thrust applied to the objects conveyed by the belt 5 is reduced, with less stress exerted on the object to be deflected, and lower wear of the pusher device 22.

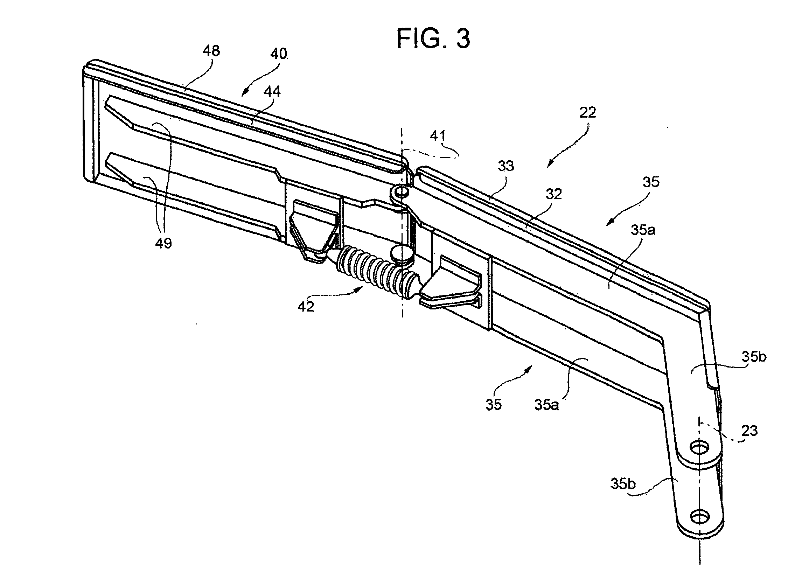

The first pusher member 22 (see Figures 1 and 3) comprises a plane rectangular wall 32 (typically made of metal material, for example aluminium), which, in the resting position, sets itself to close a first part of the opening 16 and, in the activation position, sets itself transverse to the direction D of advance of the conveyor belt 5.

The plane rectangular wall 32 has a front face facing the outside of the casing 3 and the conveyor belt 5 that is coated with an elastic surface 33, made, for example, of polyethylene with neoprene strips fixed on an aluminium base that dampens the impact of the diverted object on the wall itself. This surface is tapered at an angle in a vertical direction to obtain a slight effect of lifting of the object to be deflected from the surface of the conveyor belt. Given that it operates like the profile of a golf club, the aim is to reduce the friction on the surface of the conveyor belt due to the weight force and a rear face, extending on which are two L-shaped reinforcement elements 35. In particular, each L-shaped reinforcement element 35 comprises a first rectilinear portion 35a stably fixed (for example welded) to the metal wall 32, and a second rectilinear portion 35b integral with the first portion and having a free end hinged to the supporting element 18 to provide rotation of the moving element 7 about the axis of rotation 23.

The moving element 7 further comprises a second pusher member 40 hinged to the second end portion 22b of the first pusher member 22 mobile with respect to the first pusher member about a further axis of rotation 41 parallel to the axis of rotation 23. A shock absorber 42 is moreover arranged between the first pusher member 22 and the second pusher member 22, 40 for dissipating part of the energy that the rotation of one pusher member with respect to the other produces following upon impact of an object 10 with the moving element.

In particular, in a way similar to what has been said for the first pusher member 22, the second pusher member 40 comprises a plane rectangular wall 44 (typically made of metal material, for example aluminium), which, in the resting position, sets itself for closing a second part of the opening 16 and, in the activation position, sets itself transverse to the direction of advance D of the conveyor belt 5.

The plane rectangular wall 44 has a front face, facing the outside of the casing 3 and the conveyor belt 5 coated with an elastic surface 48 (made, for example, like the surface 33), and a rear face, extending on which are two rectilinear reinforcement elements 49 (Figure 3). In particular, each reinforcement element 49 has a free end hinged to a respective L-shaped element 35 to provide rotation of the pusher members 22, 40 with respect to one another about the axis 41.

Typically, a shock absorber 42 can be used (adjustable oil shock absorber with return spring like the ones used on motor cycles). The shock absorber 42 is configured in such a way that, in the absence of stresses, the rectangular wall 32 and the rectangular wall 44 lie in different planes that form between them an angle just over 180°, for example. This conformation of the pusher member enables application in the best possible way of the thrust of diversion in all the possible cases of contact with the object to be diverted. If, in fact, a medium-sized object (300 mm in width x 500 mm in length) is moving on the belt 5 close to the pusher member 22 set in the resting position, at the moment of activation the thrust will be applied alongside the object roughly via the surface 33. This enables application of the force with an advantageous lever and a low level of load applied to the pusher. In addition, the variation of momentum in the direction of advance of the object will be minimal, with a reduction also of the force of impact and the stresses exerted on the entire mechanism.

If, instead, the same object is moving on the belt on the other side far from the pusher member 22, during the activation cycle it will receive the thrust via the surface 48, which will encounter the object itself with a greater angle of impact, producing an impulsive force that is the higher, the greater the inertia. For this reason, an angle between the walls 32 and 44 is adopted, and an articulated joint is present that enables the mechanism to increase this angle during the phase of thrust, maximizing the force applied in a transverse direction and reducing the impulsive force due to frontal impact. The shock absorber applied between the two parts of the pusher prevents an excessive amplitude of this angular stroke and above all limits the whiplash that occurs at the end of the return phase, when, in loadless conditions, the pusher returns into the resting position with a sharp deceleration.

## Claims

1. A device for diverting objects from a conveyor belt comprising supporting means (3,18) adapted to be arranged alongside a conveyor belt (5), and a moving element (7), which moves under the thrust of an actuator between:
- a resting position, in which the moving element (7) does not interfere with the objects (10) carried by the conveyor belt (5); and
- an activation position, in which the moving element (7) extends towards the conveyor belt (5) in such a way that the objects (10) abut on the moving element and are diverted in a direction transverse to that of advance of the conveyor belt (5);
the moving element comprising at least one pusher member (22) having a first end portion hinged to the supporting means and mobile with respect thereto about an axis of rotation (23) which is set, during use, vertical, said device being **characterized in that** said actuator comprises a crank-and-connecting rod system, in which at least one connecting rod (25) has a first end portion (25a) hinged to the pusher member (22) in an area of the pusher member comprised between a second end portion thereof and the axis of rotation; said connecting rod having a second end portion (25b) hinged to an end portion of a crank (27), angularly mobile about a motor axis of rotation (28) parallel to said axis (23).

2. The device according to Claim 1, wherein the first end portion (25a) of said connecting rod is hinged to the first pusher member (22) in a central area of the pusher member substantially set at the same distance from the axis of rotation (23) and the second end portion (22b).

3. The device according to Claim 1 or Claim 2, wherein said crank-and-connecting rod system is of a double type and comprises a pair of connecting rods (25), which each have a first end portion (25a) hinged to the first pusher member (22) and a second end portion (25b) hinged to an end portion of a crank (27) angularly mobile about said motor axis (28).

4. The device according to any one of the preceding claims, wherein said pusher member (22) comprises a plane wall (32) typically of a rectangular shape, which sets itself transverse to the direction of advance of the conveyor belt (5) in said activation position.

5. The device according to Claim 4, wherein said plane wall (32) has a front face facing the conveyor belt (5) that is coated with an elastic surface tapered at an angle upwards, in use, so as to generate on the object a thrust that tends to lift it from the belt (33).

6. The device according to Claim 4 or Claim 5, wherein said plane wall (32) has a rear face, extending on which is at least one L-shaped reinforcement element comprising a first rectilinear portion (35a) stably fixed to said plane wall (32), and a second rectilinear portion (35b) integral with the first rectilinear portion and having a free end hinged to said supporting means (18) to provide rotation of the moving element (7) about said axis of rotation (23).

7. The device according to any one of the preceding claims, wherein: said moving element (7) moreover comprises a further pusher member (40) hinged to said second end portion (22a) of the pusher member (22) and mobile with respect to the first pusher member about a further axis of rotation (41) parallel to the axis of rotation (23); a shock absorber (42) is arranged between the pusher members (22, 40) for dissipating part of the energy that the rotation of one pusher member with respect to the other produces following upon impact of an object (10) with the moving element (7).

8. The device according to Claim 7, wherein said further pusher member (40) comprises a typically rectangular plane wall (44), which has a front face facing the conveyor belt (5) that is coated with an elastic surface (48).

9. The device according to Claim 7 or Claim 8, wherein said shock absorber (42) is configured in such a way that, in the absence of stresses on the moving element, the pusher member and the further pusher member lie in different planes that form between them an angle just over 180°.
